(19) Europäisches Patentamt / European Patent Office / Office européen des brevets

(11) **EP 2 243 547 A1**

(12) **EUROPEAN PATENT APPLICATION**

(43) Date of publication:
27.10.2010 Bulletin 2010/43

(21) Application number: 09158223.9

(22) Date of filing: 20.04.2009

(51) Int Cl.:
*B01J 20/06* (2006.01)        *B01J 41/10* (2006.01)
*C02F 1/42* (2006.01)         *C01G 25/02* (2006.01)
*G21F 9/12* (2006.01)

(84) Designated Contracting States:
AT BE BG CH CY CZ DE DK EE ES FI FR GB GR
HR HU IE IS IT LI LT LU LV MC MK MT NL NO PL
PT RO SE SI SK TR

(71) Applicant: **Fortum OYJ**
**02150 Espoo (FI)**

(72) Inventors:
• **Koivula, Risto**
**00014, University of Helsinki (FI)**
• **Harjula, Risto**
**00014, University of Helsinki (FI)**
• **Manni, Hannele**
**00930 Helsinki (FI)**

(74) Representative: **Sundman, Patrik Christoffer**
**Seppo Laine Oy**
**Itämerenkatu 3 B**
**00180 Helsinki (FI)**

(54) **Novel sorbent, method of producing the same and the use thereof**

(57)      A sorbent for antimony anions, consisting essentially of particles or granules of zirconium oxide having a distribution coefficient for antimony anions of at least 10,000 ml/g. The invention also provide a method of producing the new sorbent as well as methods of removing antimony and optionally tcchnctium from solutions. The coefficient of distribution is so high that the material can readily be applied to industrial use. The preparation process is straightforward and the sorbent can be produced from readily available materials at moderate conditions.

**EP 2 243 547 A1**

**Description**

**Background of the Invention**

**Field of the Invention**

The present invention relates to sorbents and to the use thereof. In particular the present invention provides novel sorbents for the removal of antimony oxo-anions from aqueous solutions and dispersions. The invention also concerns a method of producing the novel sorbents. Further, the invention concerns the use of the anion sorbents for removing radionuclides as well as non-radioactive species, of antimony and technetium, including their oxo-anionic forms (antimonate and pertechnetate), from nuclear waste effluents.

**Description of Related Art**

Selective ion media, e.g. inorganic adsorbents and ion exchangers, are increasingly used for the removal of key radionuclides, such as Co-60, Sr-90 and Cs-137, from nuclear waste effluents due to their radiation stability, high processing capacity and high decontamination efficiency [1, 2]. The materials used are commercially available cation exchangers or sorbents (e.g. zeolites, titanates, silicotitanates, hexacyanoferrates), which can efficiently remove cationic radioactive species. Inorganic anion exchange materials are quite rare and do not possess high selectivity.

With respect to radiation doses to personnel and environment, Co-60, Co-58 and Cs-137 are the most critical radionuclides in waste liquids and water streams of a nuclear power plant (NPP). Improved processing systems have been able markedly to reduce the discharges of these radionuclides at many utility sites and further efforts have been directed to removing other radionuclides such as Cr-51, Ag-110 and Sb-125 that dominate in solution after cesium and cobalt elimination.

Recently, much attention has been paid to $^{125}$Sb. It may exist completely in soluble form in the Floor Drain Waters [3]. In solution, antimony can exist in two oxidation states (+3, +5) and in several hydroxyl species (e.g. $Sb(OH)_6^-$, $Sb(OH)_3$ (aq) and $Sb(OH)_4^+$), depending on the pH and redox conditions [4]. These chemical features indicate that it is difficult to remove antimony from solution.

Recent tests have showed that standard demineralizer resins and ion selective media are ineffective for the removal of Sb from liquid radwaste [5]. However, some commercially available inorganic cation exchangers, such as CoTreat, can remove Sb-125 from NPP Floor Drain water with good efficiency [3] in some cases, but their utilization is obviously restricted to cationic antimony species. Regarding other methods, chemical additives coupled with ultra filtration have been shown to be effective method for Sb-125 removal in a test program conducted at Duke Power Company's Oconee plant [6]. Study of other methods such as electro-deionization and hollow-fiber filtration is underway e.g. in the EPRI Low-Level Waste program [7].

A few reports on removal of antimony using zirconium oxide based material have been published [8, 9]. In these studies a zirconium oxychloride ($ZrOCl_2$) was used as a precursor for the zirconium oxide and only the uptake of cationic antimony was under study. The result of these studies shows that, with the described zirconium oxide material an uptake of less than 96 % of trace amount antimony (corresponding to a coefficient of distribution of less than 2000 ml/g) could be achieved. Such selectivity is, however, quite unsatisfactory for industrial use.

**Summary of the Invention**

Based on the above, it is an aim of the present invention to eliminate at least a part of the problems of the art and to provide a novel anion sorbent material which is highly selective for antimony in NPP effluents and which therefore is capable of industrial application.

It is another aim of the invention to provide a method of producing novel anion sorbents capable of removing radioactive isotopes of antimony.

In particular it is an aim to provide anion sorbents capable of removing radionuclides selected from the group of Sb-122, Sb-124, Sb-125, and Tc-99 and mixtures thereof, as well as corresponding non-radioactive species.

The present invention is based on the concept of providing a novel material for the removal of antimony and optionally also technetium from aqueous solutions, comprising a zirconium oxide material having a coefficient of distribution for antimony of at least 10,000 ml/g, said material being present in a finely divided form, for example as a powder or as a granular material.

The material can be prepared by a precipitation process in which a zirconium precursor is dissolved in an acid or aqueous solution of a strong acid, and the pH of the solution is, upon dissolution of the precursor, increased, preferably gradually, to at least pH 2, in particular to a value in the range of 2 to 10, and the precipitate is collected and recovered after washing.

The material can be co-precipitated with doping ion(s), for example antimony ion(s), for producing a material capable of sorbing also technetium form the aqueous solution.

More specifically, the present material is mainly characterized by what is stated in the characterizing part of claim 1.

The method of producing the novel material exchanger is characterized by what is stated in the characterizing part of claim 7, and the method of removing antimony and optionally technetium from aqueous solutions is characterized by what is stated in the characterizing part of claim 13.

Considerable advantages are obtained with the invention.

The present invention provides a novel sorbent or ion exchange material, zirconium oxide powder or granules, with a performance which is orders of magnitudes higher than that of previously reported zirconium oxide materials. The coefficient of distribution is so high that the material can readily be applied to industrial use. The preparation process is straightforward and inexpensive in the sense that readily obtainable materials are used at moderate conditions.

Next the invention will be examined more closely with the aid of a detailed description with reference to the attached drawings.

## Brief Description of the Drawings

Figures 1a and 1b show XRD diffractogram, viz. Figure 1a of a $ZrO_2$ material and Figure 1b of a $Zr(Sb)O_2$ material;

Figure 2 shows the distribution coefficient of $^{125}$Sb (antimonate) on ZrO and Zr(Sb)O (Sb 5 %) material in 0.1 M $NaNO_3$ as a function of pH;

Figure 3 shows column uptake of $^{125}$Sb by Zr(Sb)O-material (Sb 5 %) in simulated Floor Drain Water BWR1; and

Figure 4 shows uptake of $^{124}$Sb in a column packed with ZrO-material - the initial flow rate 22 BV/h was changed to 8 BV/h at 780 bed volumes.

## Detailed Description of Preferred Embodiments

For the purpose of the present invention, the term "sorbent" is used interchangeably with "ion exchanger" for designating the present zirconium oxide material. The actual mechanism by which anions of antimony and ions of technetium are sorbed to the material have not be elucidated. It is possible that the sorption is based on ion exchange but it is equally possible that for example redox processes and surface complexation processes may be involved. Naturally, a combination of various sorption mechanisms may be at hand, and the present invention is not limited to any particular mechanism.

For the sorbent use, the zirconium oxide material can be used as such, i.e. with the addition of further sorbing species or groups, but for sorbing technetium from liquid solutions it is preferred to add a doping agent, preferably a trivalent ion such as antimony.

As mentioned above, the present material which is capable of sorbing anions of antimony (antimonate) and technetium, including oxo-anions thereof, comprises essentially particles or granules of a zirconium oxide (zirconia) having a high distribution coefficient for radioactive antimony. The distribution coefficient is at least 10,000 ml/g or least 15,000 ml/g, in particular at least 50,000 ml/g. Preferably the distribution coefficient at a pH in the range of 2 to 10 is at least 100,000 ml/g and in particular 250,000 ml/g, e.g. at least 500,000 ml/g, optionally 1,000,000 ml/g or even more.

When the sorbent or ion exchanger comprises a powdery material, the particles have an average particle size in the range of about 10 nm to 100 um, and they typically have a flow rate (also known as "through-put capacity") of 100 to 10,000 bed volumes per hour. On the other hand, when the ion exchanger comprises a granular material, the particles have an average particle size of 0.1 to 2 mm and a flow rate of 10 to 50 bed volumes per hour.

"Bed volume" is calculated from the bulk volume of the material content in the sorbent vessel.

The present invention provides a method which basically comprises a combination of the following steps, namely

- dissolving a zirconium compound in an aqueous medium at a pH below 1 to form a zirconium containing solution;
- raising the pH of the solution to a value of at least 2 by adding a base;
- settling out a precipitate comprising zirconium oxide;
- washing the zirconium oxide precipitate; and
- recovering the zirconium oxide.

As will be discussed below in more detail, the anion exchanger may further comprise a doping metal ion, such as antimony, for example antimony(III), for improving co-sorption of technetium from the aqueous solution.

The zirconium precursor is typically a zirconium halogenide or a zirconium oxohalogenides, such as zirconium(IV) chloride, zirconium(IV) sulphate, zirconium(IV) carbonate, zirconium(IV) nitrate, zirconium(IV) oxynitrate, zirconium (IV) oxychlorite, or a mixture thereof.

In the first step of the method, the zirconium precursor is dissolved in an aqueous solution of a mineral acid. The mineral acid can be hydrochloric acid, nitric acid or sulphuric acid, but also strong organic acids, such as sulphonic acids can be used. Mixtures of two or more can equally be used. The aqueous solution has typically a molality of 0.1 to 10 M with respect to the acid, and the pH is 1 or less, often close to 0 and even below 0.

After the dissolution of the precursor in the acid, the pH of the solution is increased to a value in the range of 2 to 10 by adding a base or generally "alkaline agent". The alkaline agent can be selected from the group of alkaline metal hydroxides, earth alkaline metal hydroxides, ammonia and ammonium hydroxide. In the examples, ammonia is used. Naturally, also organic bases such as organic, aliphatic or aromatic amines can be employed.

As a result of the increase of the pH, zirconium oxide will separate from the aqueous phase. It will be, preferably extensively, washed with water or an aqueous solution until the interface between the supernatant and precipitate is not clear indicating some slight turbidity. Then, the precipitate is recovered, heated up and dried to provide the present material. When a doping agent is to be included it is preferably added to the acidic zirconium containing solution.

Depending on the washing and separation procedures, pigments size particles or granules can be recovered. Typically, the particles have a particle size in the range from of about 10 nm up to about 100 um, preferably the average particle size is about 50 nm 10 um. The granules have average particle sizes in the range of about 0.1 um up to about 2 mm, and typically granules suitable for absorbent use on an industrial scale have a granule size of about 0.1 to 2 mm.

The material produced by the indicated process is typically amorphous. The term "amorphous" stands for a state of the material wherein a XRD analysis gives a broad spectrum of diffraction peaks. This state can also be considered to be indicative of a "nanocrystalline", i.e. the material comprises minute crystals having a broad range of crystal sizes. As the results reported below show, the amorphous material has excellent sorption properties for antimony and also for technetium, in particular after doping.

It is possible to increase the degree of crystallinity by thermal or hydrothermal treatment, i.e. by heating either the dry or moist powder or granules or by heating the material in slurry.

The present invention provides also a method of removing antimony ions from aqueous solutions, particularly from nuclear waste liquids. The method comprises typically the steps of

- contacting the antimony containing aqueous solution with a zirconium oxide for binding antimony to the zirconium oxide and for providing an aqueous solution of reduced antimony content, and
- separating the aqueous solution from the zirconium oxide,

wherein the zirconium oxide comprises an anion sorbent or ion exchanger, consisting essentially of particles or granules of zirconium oxide having a distribution coefficient for antimony of at least 10,000 ml/g.

As explained above, the method can be used for removing radionucleotides, i.e. radioactive antimony and optionally technetium, including their oxo-anionic forms, from nuclear waste effluents. This will be shown in the below examples. However, it is also possible to remove non-radioactive ions of antimony and technetium from solutions using the present materials.

For use on an industrial scale, the sorbent material is preferably arranged into a sorption unit, for example in an ion exchange column housing. Generally, the sorption unit comprises a sorption bed, formed by the present sorbent material, arranged within a housing. Typically, the housing comprises means for allowing inflow of the liquid which is to be treated, the flow of the liquid through the sorbent material, and means for allowing withdrawal of the treated liquid (the effluent). The inlet means are connectable to a source of antimony containing liquid.

Several different configurations are possible.

In a traditional column, the material is fitted or packed between two supporting structures to form a sorbent bed. The sorbent bed can be placed in a pressure vessel or in a non-pressurized vessel. The liquid which is to be treated can be conducted through the sorbent as a plug flow or by distributing the flow with a distributing means.

Another option is to arrange the material inside a cylindrical container having an annular cross-section and provided with a porous wall on the inside or outside or both, for allowing inflow of the liquid from the inside or the outside into the sorbent layer in the annular housing. The liquid can be conducted from the outside through the sorbent layer into the inner space defined by the inner wall of the annular structure or vice versa.

Naturally other configurations can be contemplated. Typically, in industrial use, upstream of the sorbent unit there is a filtering means which is used for separating solid matter from the liquid to be treated.

There can be merely one sorption unit or a plurality of sorption units, at least one of the units being provided with the present sorption material. Naturally, the present material can be combined into a sorption bed or layer in a sorption unit comprising another ion exchange or sorption bed.

If there are several units, they can be fitted in a serial arrangement (as a cascade) or in parallel or in a combination of serial and parallel arrangement. It is preferred to have at least two units in parallel to allow for service and replacement of sorbent material in one while the parallel other is being in operation.

Next, the preparation of the materials is described in more detail, and then the properties of the novel materials will be examined with the aid of working examples.

**Preparation**

It possible to make plain Zr-oxide materials or Zr-oxide materials doped with antimony.

Doping with antimony is necessary for efficient removal of pertechnetates

**ZrO-material (no Sb doping)**

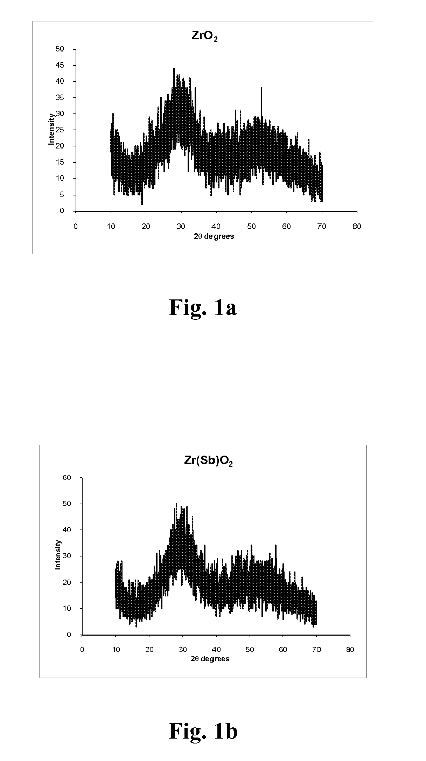

$ZrCl_4$ was dissolved in 3 M mineral acid (HCl or $HNO_3$, also $H_2SO_4$ possible) under constant stirring. The pH of the zirconium solution was raised adding slowly/drop-wisely concentrated ammonia (25 % - 30 %) till the pH was in a range of 2 to 9 and stirring was continued for 30 minutes. The slurry was allowed to settle for 30 minutes and clear supernatant was discharged. The slurry was washed by adding equal volume of distilled water and applied stirring for 5 minutes. The slurry was left to settle for 60 minutes and clear supernatant was discharged. The washing procedure was continued until the supernatant after 60 minutes settling time remained faintly cloudy and the interface between supernatant and slurry was not clear. The faintly cloudy supernatant was discharged and the slurry was dried at 70 °C in watch glass for 48 hour until the product was dried and hard particles were formed. The materials were found to be amorphous under XRD analysis as shown in Figure 1a.

**Zr(Sb)O (Sb doped material)**

$ZrCl_4$ was dissolved in 3 M mineral acid (HCl or $HNO_3$, also $H_2SO_4$ possible) under constant stirring. 1 % to 50 % (atomic-%) of doping element, antimony (III) chloride, was added to the solution and was left to dissolve for 15 minutes. The pH of the zirconium/antimony solution was raised adding slowly/drop-wisely concentrated ammonia (25 % - 30 %) till the pH was in a range of 2 to 9 and stirring was continued for 30 minutes. The slurry was allowed to settle for 30 minutes and clear supernatant was discharged. The slurry was washed by adding, equal volume of distilled water and applied stirring for 5 minutes. The slurry was left to settle for 60 minutes and clear supernatant was discharged. The washing procedure was continued until the supernatant after 60 minutes settling time remained faintly cloudy and the interface between supernatant and slurry was not clear. The faintly cloudy supernatant was discharged and the slurry was dried at 70°C in watch glass for 48 hour till the product was dried and hard particles were formed. The materials were found to be amorphous under XRD analysis, as will appear from Figure 1b.

Instead of zirconium(IV) chloride, also zirconium(IV) sulphate, zirconium(IV) carbonate, zirconium(IV) nitrate, zirconium(IV) oxynitrate, and zirconium(IV) oxychlorite can be used as the precursor for zirconium in the above mentioned synthesis.

The above mentioned synthesis differs from the synthesis described by Bhattacharyya and Dutta [8] mainly by how the zirconium precursor is dissolved. Bhattacharyya dissolved $ZrOCl_2$ in water whereas the above mentioned synthesis uses acids, in particular strong acids, such as mineral acids, for dissolution of the zirconium precursor.

**Performance in antimony and technetium removal**

The zironium oxide materials have been tested extensively for the removal of $^{124}$Sb, $^{125}$Sb and $^{99}$Tc using simulated and real nuclear waste liquids. The testing has been carried out in static and dynamic conditions. In static experiments, the distribution coefficient, $k_d$, has been determined for the radionuclides, using the following equation:

$$k_d = \frac{radionuclide\ concentration\ in\ solid}{radionuclide\ concentration\ in\ solution} = \frac{A_0 - A_{eq}}{A_{eq}}\frac{V}{m}$$

wherein

$A_0$ and $A_{eq}$    are the activity concentrations (Bq/l) or count rates (cpm) in solution before and after contact with the sorbent material, respectively.

V    is the solution volume (typically 10-20 mL) and

m    is the mass of sorbent material (typically 100-20 mg) contacted with the solution.

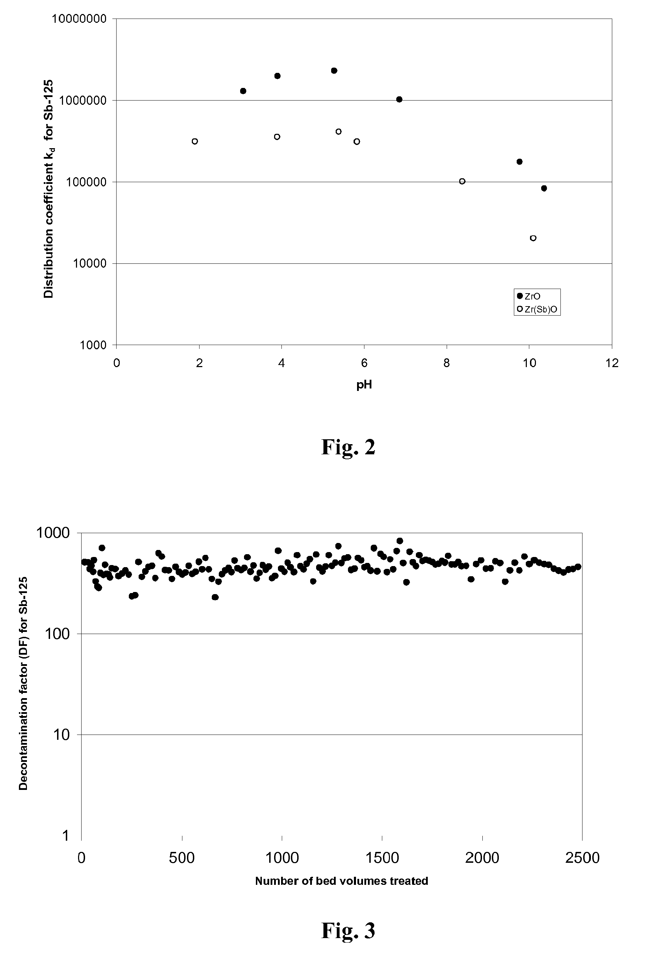

In dynamic experiments, solutions were passed through ion exchange column (column volume typically 1 cm$^3$) packed with the sorbent material (grain size 0.15-0.30 mm which is typical for small-scale testing, cf. Figs 2 to 4) at various flow rates (typically 10-20 cm$^3$/h). The outlet solution was collected in fractions and counted for the radioactivity content. The decontamination factor (DF) for the outlet solution was calculated as the ratio of the activity concentrations in the feed solution (A$_0$) and outlet solution (A), respectively, i.e.

$$DF = \frac{A_0}{A}$$

When the column material has a very high capacity (as is the case when trace amounts of radionuclides are removed with highly selective materials), it is often difficult to measure the processing capacity in the column experiments due to time and activity build-up constraints. However, measurement of k$_d$-value gives, by definition, the maximum theoretical processing capacity - in terms of solution volume (ml) - that can be purified with a given amount (g) of sorbent material.

Static test carried out with 0.1 M NaNO$_3$ showed that the sorbent materials take up Sb-125 efficiently in relatively high nitrate background over a broad pH-range of solution.

Figure 2 shows the distribution coefficient of $^{125}$Sb (antimonate) on ZrO and Zr(Sb)O (Sb 5 %) material in 0.1 M NaNO$_3$ as a function of pH.

As will appear, the material doped with Sb had somewhat lower uptake of Sb than the non-doped material

**Table I. Chemical compositions of simulated NPP Floor Drain Waters used in the testing of sorbent materials; $^{125}$Sb(antimonate) tracer added to yield 9,000-15,000 cpm/10 mL.**

| Component mg/L | PWR1 | PWR2 | BWR1 |
|---|---|---|---|
| Na | 36.8 | 43.3 | 90.1 |
| K | 7.7 | 75.0 | nd |
| Ca | 0.86 | 290 | 29.8 |
| H$_3$BO$_3$ | 160 | 120 | nd |
| pH | 8.7-9.0 | na | 6.2 |

Another test with simulated nuclear power plant Floor Drain Waters (Table I) showed that Sb-doped Zr-oxides removed Sb-125 from solution in most cases to a level below the detection limit (Table II). Even in the cases where some measurable Sb-125 remained in the solution, the calculated k$_d$-values were in excess of 5,000,000 ml/g.

**Table II. Distribution Coefficients k$_d$ (Ml/G) Of Sb-125 in Simulated Floor Drain Waters.**

| | k$_d$ for Sb-125 (ml/g) | |
|---|---|---|
| Simulant/Metal oxide | Zr(Sb)O ( 5% Sb) | Zr(Sb)O (13 % Sb) |
| PWR1 | 6,502,700 | nd |
| PWR2 | nd | 5,059,700 |
| BWR1 | nd | nd |
| nd = Sb-125 below detection limit | | |

In a dynamic test, a column packed with Zr(Sb)O-material (Sb 5 %) removed Sb-125 from the simulated Floor Drain Water (BWR1, see Table 1) with good efficiency, the decontamination factor DF was about 300-600 most of the time (cf. Fig. 3). The DF remained at this constant level and did not thus depend on the flow rate which was increased stepwise from 10 BV/h to 50 BV/h during the experiment. There was no sign of column exhaustion (i.e. drop in DF) at the conclusion of the test when 2,500 bed volumes of solution had been treated.

Laboratory-scale column test have also been carried out using real radioactive waters form nuclear power plants. Fuel pond water from Olkiluoto NPP (BWR, Finland) contained Sb-125 at a level of 400 Bq/l (Table III).

**Table III. Composition of Fuel Pond Water from Olkiluoto-1 BWR, Finland**

| Component | Value | Unit |
|---|---|---|
| Conductivity | 1 | $\mu$Sv/cm |
| $SO_4^{2-}$ | 4 | $\mu$g/L |
| Oxalate | 1.5 | $\mu$g/L |
| Cl- | 2 | $\mu$g/L |
| Sb-125 | 396 | Bq/L |
| Cs-137 | 8.6 | Bq/L |
| Co-60 | 11.1 | Bq/L |

In the column test, 1 L (2000 BV) of Fuel Pond Water was fed through the column of Zr(Sb)O-material (Sb 5 %) material. No Sb-125 was detected in the outlet solution, as will appear from the results presented in Table IV. Calculated from the minimum detectable activity (MDA) of 1.7 Bq/L, the decontamination factor for Sb-125 was greater than 230.

**Table IV. Column removal of radionuclides from the Fuel Pond Water (see Table III).**

| No. of BV treated | DF | | |
|---|---|---|---|
| | Sb-125 | Cs-137 | Co-60 |
| 360 | >230 | 1.7 | 2.7 |
| 861 | >230 | 1.5 | 1.7 |
| 1354 | >230 | 1.4 | 1.4 |
| 1831 | >230 | 1.3 | 1.0 |
| BV = bed volumes, DF = decontamination factor | | | |

Primary Coolant Water (PCW) samples were obtained from Loviisa Unit 1 service shutdown during temperature drop from 140 °C to 55 °C, when the major burst of antimony occurs. Chemical analysis showed that major constituent in PCW was boric acid (14 g/L) and that minor amounts of dissolved iron (68 $\mu$g/L) were present. The major gamma-emitting radionuclides in the PCW were $^{58}$Co (240,000 Bq/L) and $^{124}$Sb (637,000 Bq/L). These radionuclides were mainly in soluble form; filtration (0.45 $\mu$m) removed only 7.4 % of $^{58}$Co and 8.2 % of [124]Sb.

**Table V: Uptake of $^{124}$Sb from Loviisa Unit 1 Primary Coolant Water by Zirconium Oxides prepared from Different Precursors**

| Zirconium precursor | $k_d$ (ml/g) | Zirconium precursor | $k_d$ (ml/g) |
|---|---|---|---|
| $ZrCl_4$ | BDL | $ZrO(NO_3)_2$ | BDL |
| $ZrOCl_2$ | BDL | $Zr(SO_4)_2$ | 1,603,250 |
| $Zr(OH)_2CO_3$ | 2,754,230 | | |
| BDL = below detection limit. Commercial $ZrO_2$ (Merck art. 8914) had a $k_d$ of 1,650 ml/g | | | |

Materials prepared from different Zr-precursors removed practically all $^{124}$Sb from Loviisa Unit 1 Primary Coolant Water (Table V). In most cases, $^{124}$Sb was below the detection limit (10-20 Bq/L) and when measurable, the $k_d$-values were much larger than 1,000,000 ml/g ($\log k_d > 6$). By contrast, commercial zirconium oxide supplied by Merck KGaA, Darmstadt, Germany, showed a modest $k_d$-value of 1,650 ml/g.

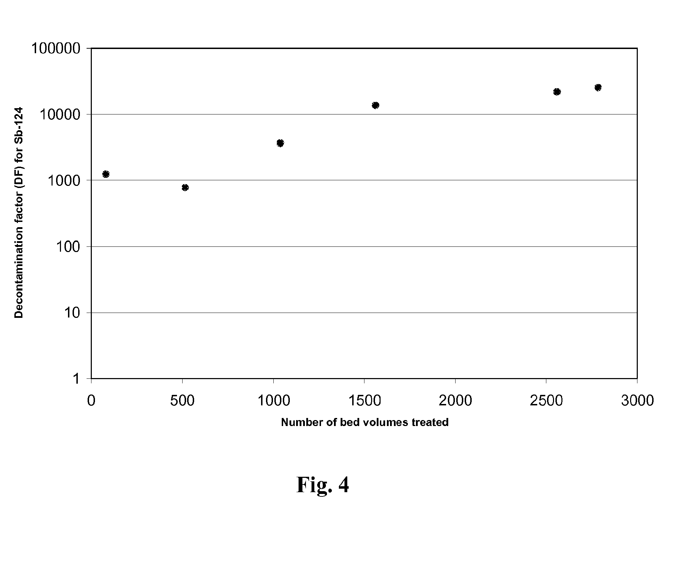

Figure 4 shows the uptake of $^{124}$Sb in column packed with the present ZrO-material. The initial flow rate 22 BV/h was changed to 8 BV/h at 780 bed volumes.

The column packed with non-doped ZrO-material was very effective for $^{124}$Sb removal from the PCW. At higher flow rate of 22 BV/h, the decontamination factors (DF) were in the order of 1,000 (Fig. 4). When the flow rate was decreased to 8 B/h, the DF's increased markedly and DF-values as high as 30,000 were measured. In one effluent sample, $^{124}$Sb was below the detection limit. The test was stopped when about 2800 BV of water was treated due to the small sample amount available. There was no indication of exhaustion of the column when the test was stopped.

An elution test was also carried out to investigate the stability of loaded antimony in the column.

In the test, 1 mmol/L antimonate solution (traced with Sb-125) was first fed into the column and exhaustion of Zr(Sb)O material was observed at about 500 bed volumes. At this point, 0.7 mmol of antimonate had been loaded per 1 gram of Zr(Sb)O material. The exhausted column was eluted with 500 ml of boric acid (1000 ppm) and the eluant was collected as small fractions. All collected fractions were counted for Sb-125 but were found to be at background level. Thus boric acid was unable to leach any Sb-125 from the material, which shows that Sb-125 is extremely strongly bound by the material.

In summary, the invention provides zirconium oxide materials with extremely high Sb uptake so that in many cases Sb in solution decreases below the detection limit. When measureable, $k_d$-values are even in excess of 1,000,000 ml/g, this indicates that the processing capacities of the ion exchangers of the present invention can be even in excess of 1000 $m^3$/kg or more. These values are strikingly much higher than what has been obtained with commercial materials (1,650 ml/g) or experimental material (794 ml/g, Ref. 8).

## References

1. R. HARJULA, J. LEHTO, Selective Separation of Radionuclides from Nuclear Waste Solutions with Inorganic Ion Exchangers, Radiochim. Acta, 86(1999)65.

2. R. HARJULA, A.PAAJANEN, J.LEHTO, E. TUSA, R. SMITH AND P. STANDRING, Additional Testing Of CoTreat Inorganic Ion Exchange Media For The Removal Of Co-60 From Thorp Pond Water, Proceedings of Waste Management 2004 Conference, February 29- March 4, 2004, Tucson, AZ.

3. R. HARJULA, J. LEHTO, A. PAAJANEN AND L. BRODKIN AND E. TUSA, Testing of highly selective CoTreat ion exchange media for the removal of radiocobalt and other activated corrosion product nuclides from NPP waste waters, Proceedings of Waste Management '99, Tucson, AZ, February 28-March 4, 1999.

4. K. M. Krupka and R. J. Seme, Geochemical Factors Affecting the Behavior of Antimony, Cobalt, Europium, Technetium, and Uranium in Vadose Sediments, PNNL-11485, Pacific Northwest Laboratory, Richland, Washington, 2002

5. Electric Power Research Institute, Analysis of Advanced Liquid Waste Minimization Techniques at a PWR, TR-109444, 1998.

6. Electric Power Research Institute, Improved Antimony Removal Using a Chemical Treatment and Microfiltration Process, TR-109443, 1998.

7. Electric Power Research Institute, Enhanced Liquid Radwaste Processing Using Ultrafiltration and Chemical Additives: Results of Pilot Scale and Media Testing, TR-1009562, 2004.

8. D.K. Bhattacharyya and N.C. Dutta, Immobilisation of Barium, Cadmium and Antimony Cations Over Zirconia, J. Nuc. Sci. Technol., (1991), 28(11), 1014-1018

9. D.K. Bhattacharyya and N.C. Dutta, Uptake of several tracer cations and the separation of carrier free 140La from 140Ba and also 115mIn from 115Cd using a zirconium(IV) oxide column, In Recent Developments in Ion Exchange 2, Eds. P.A. Williams and M.J. Hudson, Elsevier, 1990, pp 67-73.

## Claims

**1.** A sorbent for antimony anions, consisting essentially of particles or granules of zirconium oxide having a distribution coefficient for antimony anions of at least 10,000 ml/g.

**2.** The sorbent according to claim 1, having a distribution coefficient for antimony of at least 15,000 ml/g, in particular at least 50,000 ml/g; suitably the distribution coefficient for antimony is at least 100,000 ml/g, preferably at least 250,000 ml/g, at a pH in the range from 2 to 10.

3. The sorbent according to claim 1 or 2, comprising particles with an average particle size in the range of about 10 nm to 100 um and having a flow rate of 100 to 10,000 bed volumes per hour.

4. The sorbent according to claim 1 or 2, comprising granules with an average particle size of 0.1 to 2 mm and having a flow rate of 10 to 50 bed volumes per hour.

5. The sorbent according to any of the preceding claims, obtained by a method comprising the steps of

- dissolving a zirconium compound in an aqueous medium at a pH below 1 to form a zirconium containing solution;
- raising the pH of the solution to a value of at least 2 by adding a base;
- settling out a precipitate comprising zirconium oxide;
- washing the zirconium oxide precipitate; and
- recovering the zirconium oxide.

6. The sorbent according to any of the preceding claims, further comprising a doping metal ion, such as antimony, in particular Sb(III).

7. A method of producing a zirconium oxide sorbent comprising the steps of

- dissolving a zirconium compound in an aqueous medium at a pH below 1 to form a zirconium containing solution;
- raising the pH of the solution to a value of at least 2 by adding a base;
- settling out a precipitate comprising zirconium oxide;
- washing the zirconium oxide precipitate; and
- recovering the zirconium oxide.

8. The method according to claim 7, wherein the zirconium compound is selected from zirconium halogenides and zirconium oxohalogenides, such as zirconium(IV) chloride, zirconium(IV) sulphate, zirconium(IV) carbonate, zirconium(IV) nitrate, zirconium(IV) oxynitrate, zirconium(IV) oxychlorite, or a mixture thereof.

9. The method according to claim 7 or 8, wherein the zirconium compound is dissolved in an aqueous solution of an acid, preferably an aqueous solution of a mineral or organic acid.

1. The method according to any of claims 7 to 9, wherein the pH of the solution is increased to a value in the range of 2 to 10 by adding a alkali selected from the group of alkaline metal hydroxides, earth alkaline metal hydroxides, ammonia and ammonium hydroxide.

2. The method according to any of claims 8 to 11, wherein the zirconium oxide precipitate is washed with water or an aqueous solution until the interface between the supernatant and precipitate was not clear.

3. The method according to any of claims 8 to 12, wherein a doping agent is added to the zirconium containing solution, said doping agent preferably comprising an antimony precursor, preferably a precursor of Sb(III).

4. A method of removing radioactive or non-radioactive antimony anions from aqueous solutions, particularly from nuclear waste liquids, comprising the steps of

- contacting the antimony containing aqueous solution with a zirconium oxide sorbent for binding antimony to the zirconium oxide and for providing an aqueous solution of reduced antimony content, and
- separating the aqueous solution from the zirconium oxide sorbent,

wherein the zirconium oxide sorbent comprises particles or granules of zirconium oxide having a distribution coefficient for radioactive antimony of at least 10,000 ml/g.

5. The method according to claim 15, comprising using a zirconium oxide sorbent which is doped with trivalent antimony cations for simultaneously removing technetium from the solution.

**15.** The method according to claim 14 or 15, comprising using a zirconium oxide ion exchanger according to any of claim 1 to 6 or prepared according to any of claims 8 to 14.

**16.** Use of a sorbent according to any of claims 1 to 6 for removing antimony and optionally technetium, including their oxo-anionic forms, from nuclear waste effluents.

**Fig. 1a**

**Fig. 1b**

**Fig. 2**

**Fig. 3**

**Fig. 4**

EP 2 243 547 A1

Europäisches
Patentamt
European
Patent Office
Office européen
des brevets

# EUROPEAN SEARCH REPORT

Application Number

EP 09 15 8223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/007372 A1 (MAGNESIUM ELEKTRON INC [US]) 22 January 2004 (2004-01-22)<br>* page 10, line 19 - line 20 *<br>* page 10, line 18 - line 19 *<br>* page 5, line 5 - line 6 *<br>* page 14, last paragraph *<br>* page 15, line 2 - line 5 *<br>----- | 1-2,5, 7-10 | INV.<br>B01J20/06<br>B01J41/10<br>C02F1/42<br>C01G25/02<br>G21F9/12 |
| X | D.K. BHATTACHARYYA, S. BASU: "Separation of carrier-free 115m In from 115Cd and 132 I from 132 Te Over the zirconium oxide column"<br>JOURNAL OF RADIOANALYTICAL CHEMISTRY,<br>vol. 52, no. 2,<br>21 February 1979 (1979-02-21), pages 267-273, XP002547136<br>* page 268, last paragraph *<br>* page 269, line 1 - line 7 *<br>----- | 1-2,5, 7-10 | |
| X | EVA MISTOVA: "Selective Sorption of Sb(V) Oxoanion by Composite Sorbents based on Cerium and Zirconium Hydrous Oxides"<br>ION EXCHANGE LETTERS, [Online]<br>vol. 1, 3 October 2008 (2008-10-03), pages 4-6, XP002547137<br>Prague, Czech Republic<br>Retrieved from the Internet:<br>URL:iel.vscht.cz/articles/1803-4039-01-0004.pdf><br>[retrieved on 2009-09-18]<br>* page 4, right-hand column *<br>* page 5, paragraph r *<br>----- | 1-2,13, 15-16 | |

TECHNICAL FIELDS SEARCHED (IPC)

C02F
B01J
C01G
G21F

-/--

The present search report has been drawn up for all claims

| Place of search | Date of completion of the search | Examiner |
|---|---|---|
| The Hague | 24 September 2009 | Hilgenga, Klaas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

Europäisches
Patentamt

European
Patent Office

Office européen
des brevets

# EUROPEAN SEARCH REPORT

Application Number

EP 09 15 8223

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/051492 A1 (TRANTER TROY J [US]; HERBST R SCOTT [US]; MANN NICHOLAS R [US]; TODD) 10 March 2005 (2005-03-10) * page 2, paragraph 11 * * page 1, paragraph 2 * * page 3, paragraph 20 * | 1-2,5, 7-10,13, 15 | |
| X | US 3 332 737 A (KRAUS KURT A) 25 July 1967 (1967-07-25) * column 5, line 15 - line 19 * * column 4, line 64 - line 65 * | 1,6,13, 15 | |
| X | US 3 217 059 A (HERVERT GEORGE L; LINN CARL B) 9 November 1965 (1965-11-09) * column 5, line 5 - line 9 * | 1-2,5, 7-10 | |
| X | EP 0 716 883 A2 (BASF AG [DE]  BASF AG) 19 June 1996 (1996-06-19) * column 5, line 20 - line 32 * | 1-2,5, 7-10 | |
| X | EP 0 246 761 A1 (CORNING GLASS WORKS [US]) 25 November 1987 (1987-11-25) * column 6, line 30 - line 55 * * claim 1 * | 1-2,7-10 | TECHNICAL FIELDS SEARCHED      (IPC) |
| A,D | D.K. BHATTACHARYYA:  "Immobilization of barium, cadmium and Antimony Cations over Zirconia" JOURNAL OF NUCLEAR SCIENCE AND TECHNOLOGY, vol. 28, no. 11, November 1991 (1991-11), pages 1014-1018, XP002547138 * page 1015, paragraph 4 * | 1-5,16 | |
| A | US 3 850 835 A (MARANTZ LAURENCE BOYD [US]; MORNA CLIFFORD MATTHEW [US]) 26 November 1974 (1974-11-26) * column 6, line 40 - line 48 * | 1-5,7-8 | |

The present search report has been drawn up for all claims

| Place of search | Date of completion of the search | Examiner |
|---|---|---|
| The Hague | 24 September 2009 | Hilgenga, Klaas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
   document

EPO FORM 1503 03.82 (P04C01)

**EP 2 243 547 A1**

## ANNEX TO THE EUROPEAN SEARCH REPORT
## ON EUROPEAN PATENT APPLICATION NO.

EP 09 15 8223

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2009

| Patent document cited in search report | | Publication date | Patent family member(s) | | Publication date |
|---|---|---|---|---|---|
| WO 2004007372 | A1 | 22-01-2004 | AU<br>US | 2003281058 A1<br>2004007531 A1 | 02-02-2004<br>15-01-2004 |
| US 2005051492 | A1 | 10-03-2005 | US<br>WO | 2005288181 A1<br>2005025714 A2 | 29-12-2005<br>24-03-2005 |
| US 3332737 | A | 25-07-1967 | NONE | | |
| US 3217059 | A | 09-11-1965 | NONE | | |
| EP 0716883 | A2 | 19-06-1996 | DE | 4445142 A1 | 20-06-1996 |
| EP 0246761 | A1 | 25-11-1987 | AU<br>JP | 7259287 A<br>62270419 A | 19-11-1987<br>24-11-1987 |
| US 3850835 | A | 26-11-1974 | DE | 2427100 A1 | 18-12-1975 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. HARJULA ; J. LEHTO.** Selective Separation of Radionuclides from Nuclear Waste Solutions with Inorganic Ion Exchangers. *Radiochim. Acta,* 1996, vol. 86, 65
- **R. HARJULA ; A.PAAJANEN ; J.LEHTO, E. ; TUSA, R. SMITH ; P. STANDRING.** Additional Testing Of CoTreat Inorganic Ion Exchange Media For The Removal Of Co-60 From Thorp Pond Water. *Proceedings of Waste Management 2004 Conference,* 29 February 2004
- **R. HARJULA ; J. LEHTO ; A. PAAJANEN ; L. BRODKIN ; E. TUSA.** Testing of highly selective CoTreat ion exchange media for the removal of radiocobalt and other activated corrosion product nuclides from NPP waste waters. *Proceedings of Waste Management '99,* 28 February 1999
- Geochemical Factors Affecting the Behavior of Antimony, Cobalt, Europium, Technetium, and Uranium in Vadose Sediments. **K. M. Krupka ; R. J. Seme.** PNNL-11485. Pacific Northwest Laboratory, 2002
- *Analysis of Advanced Liquid Waste Minimization Techniques at a PWR,* 1998
- *Improved Antimony Removal Using a Chemical Treatment and Microfiltration Process,* 1998
- **D.K. Bhattacharyya ; N.C. Dutta.** Immobilisation of Barium, Cadmium and Antimony Cations Over Zirconia. *J. Nuc. Sci. Technol.,* 1991, vol. 28 (11), 1014-1018
- Uptake of several tracer cations and the separation of carrier free La from Ba and also In from Cd using a zirconium(IV) oxide column. **D.K. Bhattacharyya ; N.C. Dutta.** Recent Developments in Ion Exchange 2. Elsevier, 1990, 67-73